# EUROPEAN PATENT APPLICATION

(11) **EP 1 760 380 A1**
(43) Date of publication of application: **07.03.2007**
(21) Application number: 06026452.0
(22) Date of filing: 19.02.2001
(51) Int. Cl.: F16L 11/08

(54) **Reinforcing element for hoses**

(30) Priority: 17.02.2000 GB 0003713; 24.02.2000 GB 0004245; 28.07.2000 GB 0018404; 19.01.2001 GB 0101372
(62) Divisional of application: 01905898.1
(71) Applicant: Dixon-Roche, Keith, Canterbury, Kent CT1 3ER (GB); NV Bekaert SA, 8550 Zwevegem (BE)
(72) Inventor: Dixon-Roche, Keith, Cantebury Kent, CT1 3ER (GB)
(74) Representative: Henderson, Wendy Agnes

(57) **Abstract**

Armouring tape (102) for wrapping around a hose (300) during its fabrication by a hose-wrapping machine (200; 400). The tape (102) is coiled into a roll (100) having a hollow core (109) from which the tape (102) is unwound to be wrapped onto the hose (300). The hose-wrapping machine (200; 400) rotatably mounts the roll (100) with the hose (300) passing through the roll core (109), the roll axis (108) being skewed to the hose axis (304) by the helix angle at which the tape (102) is to be wrapped onto and along the hose (300). The hose (300) is moved longitudinally through the longitudinally static roll (100) and at the same time, the roll (100) is rotated around the longitudinal axis (304) of the non-rotating hose (300). The armouring tape (102) unwinds from the inside (109) of the roll onto and along the hose (300) so as to wrap the hose (300) with a uniform helix of armouring tape (102). The use of a tape (102) containing an elastomer-embedded array of armouring cables (104) enables armouring wires and elastomer layers to be applied without a stabilising layer of fabric, and greatly simplifies setting-up of machinery for hose fabrication. The use of a tape roll (100) which can be unwound from its inside (109) enables hoses to be wrapped without having to orbit rolls that are very large and heavy.

## Description

This invention relates to the fabrication of hoses or other elongated articles, and relates more particularly but not exclusively to forms of armouring tapes and to wrapping machinery for sheathing or for armouring hoses or other elongated articles.

Hoses are flexible pipes, the larger sizes of which may be used for the bulk transfer of liquids and gases(e.g. between an oil production platform and a tanker) in a marine environment. Such large hoses are commonly armoured for increased strength against crushing and tensile loads, as well as to enhance their ability to withstand internal pressure. To certain extent, large electric cables for use underground or underwater can be considered as equivalent to hoses containing one or more insulated electric conductors, at least from considerations of the need for and methods of sheathing and armouring electric cables (e.g. consider electric cables that are cooled and/or insulated by internal fluid under pressure). Other elongated articles (e.g. umbilicals) may have similar properties and requirements that can be met by sheathing and armouring. In the following specification, for simplicity and brevity the term "hose" (or "hoses" in the plural) will be utilised as a collective designation for elongated articles including but not restricted to hoses and other flexible pipes, electric cables, umbilicals, and other elongated articles having analogous properties, for which sheathing and/or armouring is desirable or necessary; statements in the following specification should be construed accordingly.

In the current state of the art of hose manufacture, rubber-bonded hoses are armoured by first wrapping or extruding a layer of rubber around a hose core (assembly of inner layers), the rubber-coated core then being wrapped around with single-strand steel wires or multi-strand steel cables as the armouring material. Successive layers of rubber and armouring are extruded/wrapped around the part-fabricated hose to build up a completed hose. This rubber is initially unvulcanised, and each armouring wire or cable is individually wrapped onto the unvulcanised rubber under applied tension. If the unvulcanised rubber is not self-reinforced or otherwise constrained in some suitable manner, the armouring wire or cable will cut through the rubber to leave the armouring layer uneven and unstable, and consequently reduce the strength and stability of the armouring layer. Currently this problem is mitigated by infilling each layer of rubber with a woven fabric so as to inhibit the rubber from oozing around the armouring wire or cable as the wire or cable is being wrapped around the rubber layer.

Problems arise from the conventional hose armouring techniques, as follows :
(1) the woven fabric (utilised as an infilling) will absorb gas during use of the finished hose, and is liable to initiate delamination and/or splitting of the multi-layered hose upon explosive decompression (i.e. upon rapid depressurisation of fluid contained within the bore of the hose) ;
(2) the fabric adds to the cost of the finished hose in respect of the extra material and the additional manufacturing procedures required;
(3) the set-up time for a wrapping machine that must rotate and wrap upwards of a hundred wires or cables is excessive, and given that setting-up usually interrupts production (because production cannot continue during setting-up), this procedure is counterproductive;
(4) the armouring wires or cables must be laid with a packing density of less than 100%, and the wrapping of individual wires and cables inevitably results in bunching and the accumulation of gaps such that the final product is non-uniformly flexible and prone to "bird-caging" (a form of cable failure in which debonding and armour bulging occur);
(5) conventional armour wrapping machines induce twisting of the armouring wires and cables as they are being wrapped;
(6) alternate wrapping of rubber layers and wire/cable layers results in superficial bonding between these successive layers which will add to the problems outlined in paragraph (4) above;
(7) conventional armour wrapping machines are planetary, i.e. rolls of wrapping wire/cable are carried in orbits around the hose being built up, and unwind from the outside of the rolls; this is tolerable for small rolls where inertia is minimal but becomes a serious problem with rolls whose diameters are four or five metres and which weigh many tonnes (as are required for larger hoses that must be manufactured without joints in the armouring wires, even in hoses of great length);
(8) conventional armour wrapping machines are sufficiently large and expensive as to limit hose manufacturers to the purchase of a single such machine; this single-machine limitation requires that during its fabrication, a given hose must pass through the machine each time another layer of wires/cables is added (with resetting of the machine between each pass) whereas a hose would ideally pass only once along a multi-machine production line.

In comparison to conventional hose armouring techniques, it would be preferable if :-
(1) the rubber or other elastomer was free of fabric;
(2) the armouring wires or cables were evenly distributed;
(3) the time required for setting-up (and hence the duration of production interruption) was significantly reduced;
(4) an unvulcanised rubber or other polymer could be guaranteed to flow all around the armouring wires or cables, and for multi-strand cables, also be equally dispersed within the cables;
(5) allow the use of alternative materials for armouring (e.g. carbon fibre, aramid, and the like, which may be in the form of cords, wires, fibres, or cables) using the same manufacturing equipment.

Achievement of these desiderata would ensure that the resultant hose has maximum strength and suffers minimum disruption while flexing, and would minimise the chances of delamination from explosive decompression while eliminating the potential for tearing that would be initiated by fatigue failure of the fabric.

According to a first aspect of the present invention there is provided a method of fabricating a hose (300) that is to be sheathed with at least one layer (102) of hose-sheathing material (104 + 106), the method being characterised by the step of providing a roll (100) of the hose-sheathing material (104 + 106) in the form of a tape (102), the roll (100) having a hollow core (109) whose diameter is greater than the external diameter of the hose (300), the tape (102) being withdrawable from the inside (109) of the roll (100), the method being further characterised by the additional steps of locating the roll (100) around the hose (300) such that the hose (300) passes through the core (109) of the roll (100), effecting relative rotation of the roll (100) and the hose to (300) unwind the tape (102) of hose-sheathing material (104 + 106) from the inside (109) of the roll (100) and onto the hose (300) while simultaneously effecting relative longitudinal translation of the hose (300) and the roll (100) so as helically to wrap the tape (102) of hose-sheathing material (104 + 106) onto and along the hose (300).

The roll is preferably mounted with its axis skewed relative to the longitudinal axis of the hose by a skew angle that is substantially equal to the helix angle at which the tape is helically wrapped onto and along the hose. The roll may be rotated about its own axis and/or about the longitudinal axis of the hose. Either the roll may be rotated about the longitudinal axis of the hose while maintaining the hose non-rotational about its longitudinal axis, or, alternatively, the hose may be rotated about its longitudinal axis while maintaining the roll non-rotational about the longitudinal axis of the hose. Either the hose may be longitudinally translated while maintaining the roll longitudinally static, or, alternatively, the roll may be longitudinally translated while maintaining the hose longitudinally static.

The tape of hose-sheathing material used in the first aspect of the invention may comprise an array of mutually parallel armouring wires or cables extending along the length of the tape, the array of armouring wires or cables being embedded in polymer.

According to a second aspect of the present invention there is provided a hose-wrapping machine (200; 400) for helically wrapping a tape (102) of hose-sheathing material (104 + 106) onto a hose (300), the hose-wrapping machine (200; 400) comprising roll-mounting means (414 + 416 + 418) for rotatably mounting a roll (100) of the tape (102) around the hose (300) with the hose (300) passing through a hollow core (109) of the roll (100), tape handling means (402, 404) for withdrawing the tape (102) from the inside (109) of the roll (100) and for wrapping the tape (102) onto the hose (300), and relative movement means (420 + 422) for effecting relative rotation of the roll (100) and the hose (300) and simultaneously effecting relative longitudinal translation the hose (300) and the roll (100) so as helically to wrap the tape (102) of hose-sheathing material (104 + 106) onto and along the hose (300).

The relative movement means is preferably such that during operation of the hose-wrapping machine, the hose moves longitudinally but does not rotate about its longitudinal axis, while the roll of hose-sheathing tape rotates about the axis of the hose but remains longitudinally static. The roll-mounting means may be such that the roll is rotatably mounted for rotation about its own axis, and is preferably such that the axis of the roll is skewed relative to the longitudinal axis of the hose by substantially the helix angle with which the hose-sheathing tape is intended to be wrapped on the hose, and the roll is mounted for simultaneous rotation both about the axis of the roll and about the longitudinal axis of the hose being wrapped. According to a third aspect of the present invention there is provided a tape of hose-sheathing material, the tape comprising an array of mutually parallel armouring wires or cables extending along the length of the tape, the array of armouring wires or cables being embedded in a polymer.

According to a fourth aspect of the present invention there is provided a method of manufacturing the tape of hose-sheathing material, the method comprising the steps of providing a coating die having a substantially straight row of apertures along a first side thereof and a substantially parallel-sided slit along a second side thereof opposite said first side, the number of said apertures being equal to the number of wires or cables to be incorporated into the tape, the apertures being individually dimensioned to be a close sliding fit around a respective wire or cable, said slit being dimensioned to correspond to the intended cross-section of the tape (after any necessary allowance for dimensional changes in the newly fabricated tape), the method further comprising the additional steps of threading a respective wire or cable in through each of said apertures and out through the opposite slit to a take-up means, and pumping a polymer into the die to coat the wires or cables while simultaneously operating the take-up means to take up the newly fabricated tape.

According to a fifth aspect of the present invention there is provided a roll of hose-sheathing material in the form of a tape, wherein the tape can be unwound from the inside of the roll. The tape is preferably a tape according to the third aspect of the present invention, and/or a tape manufactured by the method according to the fourth aspect of the present invention.

Embodiments of the invention will now be described by way of example, with reference to the accompanying drawings wherein :-
Fig. 1 is a simplified perspective view of a roll of hose-sheathing tape in accordance with one aspect of the present invention (Fig. 1 including an end view of the tape equivalent to a transverse cross-section of the tape);
Fig. 2 is fragmentary section, to a much-enlarged scale, of a coating die for forming the hose-sheathing tape of Fig. 1;
Fig. 3 is a simplified part-sectional plan view of a roll of hose-sheathing tape being applied to a hose by a first embodiment of hose-wrapping machine in accordance with another aspect of the present invention;
Fig. 4 is a simplified end elevation of the Fig. 3 arrangement, looking along the axis of the hose;
Fig. 5 is a simplified end elevation of the Fig. 3 arrangement, looking along the axis of the roll;
Fig. 6 is a simplified part-sectional plan view of a roll of hose-sheathing tape being applied to a hose by a second embodiment of hose-wrapping machine in accordance with the present invention;
Fig. 7 is a simplified end elevation of the hose-wrapping machine of Fig. 6, looking along the axis of the roll;
Figs. 8 and 9 are, respectively, face and side elevations of a first part of roll mounting and tape handling units comprised in of the hose-wrapping machine of Fig. 6;
Figs. 10 and 11 are, respectively, face and side elevations of a second part of roll mounting and tape handling units comprised in the hose-wrapping machine of Fig. 6; and
Fig. 12 is a simplified perspective view of the complete hose-wrapping machine of Fig. 6.

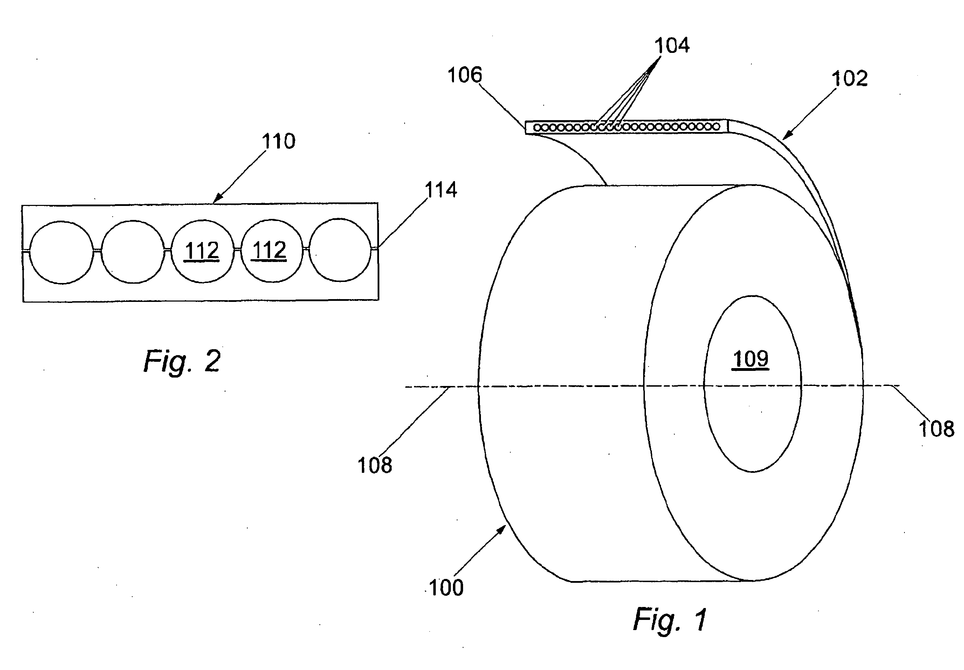

Referring first to Fig. 1, this schematically depicts a roll 100 of hose-sheathing tape 102 in the form of a row of multi-strand steel cables 104 embedded in a coating 106 of a suitable polymer, such as an elastomer (e.g. a synthetic rubber formulated for resistance to seawater). The cables 104 form an array in which they are mutually parallel and closely spaced in a single layer, without touching or mutually crossing. The material of the cables 104 is selected such that the tape 102 is suitable for sheathing a hose (not shown in Fig. 1) to form an armouring layer of the hose, as will subsequently be detailed. The stranding of the cables 104 allows the elastomer 106 to disperse into the structure of the cables 104, thereby to enhance mutual bonding of the cables 104 with the elastomer 106. The roll 100 is generally circular (in fact, a close-wound spiral) about a longitudinal axis 108 that is the axis around which the roll 100 was initially coiled. The roll 100 has a hollow core 109 around which the innermost layer of the tape 102 is exposed. Formation and mounting of the roll 100 are such that while the roll 100 is coiled up from an initial innermost layer outwards as is conventional for the winding of elongate webs, the completed roll 100 can also be unwound in the same sequence, i.e. from the innermost turn outwards or "first on, first off" (in contrast to the conventional unwinding sequence of outermost turn inwards or "last on, first off"). The fundamental importance of the tape roll 100 being capable of being unwound from its inside (i.e. from its hollow core 109) will be subsequently explained.

Fig. 2 shows part of a coating die 110 that may be utilised to form the tape 102. The die 110 has the general form of a hollow box, with an inlet side, an outlet side (not shown), and an elastomer inlet (not shown). Fig. 2 shows the inlet side of the die 110, comprising a line of apertures 112 each dimensioned to pass one of the cables 104 with a close sliding fit. The number of apertures 112 in the die 110 is equal to the number of cables 104 to be incorporated into the tape 102, the die 110 having a corresponding lateral extent (only five such apertures being shown in Fig. 2 for the sake of simplicity). The outlet side of the die 110 comprises a thin, wide, rectangular slit (not shown) whose dimensions are those of the finished tape 102, plus whatever allowance may be necessary for dimensional changes in newly coated tape leaving the die (e.g. such as may be due to depressurisation and/or curing and/or cooling of the elastomer). To form the tape 102, each of the apertures 112 has a respective cable 104 threaded through it, and out through the slit to a suitable take-up arrangement (not shown), such as a coiler, that coils the newly formed tape into a roll capable of being unwound from its innermost layer outwards. (The purpose of this facility will subsequently be detailed). In order to facilitate the insertion of the cables 104 into the apertures 112, the die 110 may be formed in two mating halves separable along a line 114 extending through the mid-line of apertures 112. Plasticised elastomer is pumped through the elastomer inlet (not shown) into the interior of the die 110 so as to coat the cables 104 and ultimately to embed the cables in an elastomer sheath with form of the tape 102, continuously withdrawn from the die 110 by the coiler or other take-up to form the roll 100. This procedure results in the production of a tape of unvulcanised elastomer 106 surrounding and bonded to a uniform layer of steel cables 104. The upper part of Fig. 1 shows the end of the tape 102 in a view that is equivalent to a transverse cross-section of the tape 102, and shows the internal structure of the tape 102. The tape 102 may be utilised for sheathing a hose (not shown in Figs. 1 or 2) in order to reinforce the hose and/or to armour the hose. Since contemporary standards for large-bore hoses and flexible pipes for maritime use prohibit joints in their reinforcing wires and cables, it follows that when a long hose or flexible pipe is to be manufactured in one piece, a roll of hose-sheathing tape that is wire-cored or cable-cored may weigh up to one hundred tonnes and may have a diameter of up to six metres. Such weight and size preclude the use of conventional planetary hose-wrapping machines, but a further aspect of the invention allows the use of rolls that are large and heavy by exploiting the ability of rolls of hose-sheathing tape in accordance with the invention to be unwound from their innermost turn outwards.

While the cables 104 preferably each have an open multi-strand form for maximisation of the elastomer/steel bonding area, and preferably also are stranded from a relatively large number of relatively small diameter wires for greater tape strength per unit of cross-sectional area (with consequent reductions in weight and cost for a tape-sheathed hose of given performance), the cables 104 can each be substituted by single-strand steel wire. As an alternative to steel, the cables 104 can be formed of a suitable non-steel material, e.g. carbon-fibre, aramid, and the like, that may be in the form of cords, wires, fibres, or cables. The tape-forming coating die 110 will have dimensions, plus aperture sizes & numbers, to suit the size and composition of the tape to be formed thereby, a separate die being provided for each such variation.

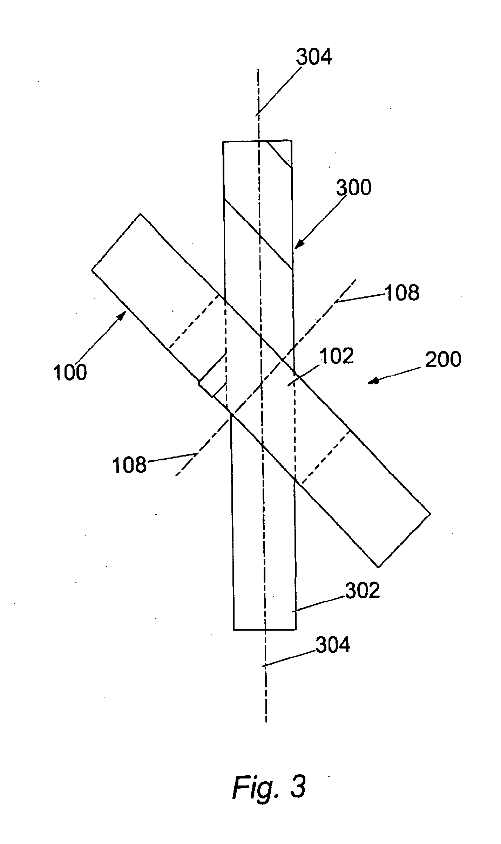

Turning now to Figs. 3, 4, and 5, these schematically depict a first embodiment 200 of hose-wrapping machine in accordance with an aspect of the invention. In Figs. 3 to 5, the machine 200 is shown helically wrapping the tape 102 (as previously described with reference to Figs. 1 & 2) onto and along a hose 300. The hose 300 is initially formed with a core 302 (i.e. an assembly of inner layers of the hose 300), and it is this core 302 that has the tape 102 wound onto the exterior of the core 302 so as to sheath the core 302 with a helically-wound layer of armouring and reinforcing cables 104 (already embedded in the elastomer 106) so as to form the reinforced and armoured hose 300. The hose-wrapping machine 200 mounts the roll 100 such that the roll 100 circumscribes the hose 300 (i.e. the hose 300 passes through the hollow core 109 of the reel 100), and the tape 102 unwinds from the inside of the roll 100 directly on to the hose core 302 passing through the centre of the roll 100. The hose 300 is moved by hose paying-out and take-up means (not shown) so as to move longitudinally (i.e. along its axis 304) in a direction towards the top of Fig. 3, but the hose 300 does not rotate around its longitudinal axis 304. During wrapping of the hose core 302 with tape drawn off the inside of the roll 100, the roll 100 undergoes combined rotations (detailed below) but the roll 100 does not move along the hose axis 304.

As viewed in Fig. 3, the tape 102 is instantaneously contacting the uppermost part of the surface of the hose core 302. Since the tape 102 is to be helically wound onto and along the hose 300, it is preferable for the roll 100 to be mounted with its initial coiling rotation axis 108 skewed relative to the longitudinal axis 304 of the hose 300 by the helix angle, which, in turn, is a function of the width of the tape 102 and the circumference of the hose core 302. However, in the arrangement of Fig. 3, the roll 100 rotates bodily around the longitudinal axis of the non-rotating hose 300, and also rotates about its own axis 108 just sufficiently to pay out the tape 102 onto the hose core 302, this combined rotation serving to wrap the tape 102 around the hose core 302 in a sustained and undeviated helix without twisting the tape 102 being wrapped. (As an alternative to rotating the roll 100 around the longitudinal axis 304 of the non-rotating hose 300 being wrapped, it would be possible for the hose 300 to undergo the necessary rotation about its longitudinal axis 304, leaving the roll 100 to rotate only about its own axis 108 by an amount just sufficient to pay out the required length of tape 102; however, actual rotation of the hose may be impracticable, especially for the larger sizes, not least because the entire length of hose would require to be uniformly rotated). Means for rotatably mounting and controllably rotating the roll 100 are omitted from Figs. 3 to 5 for the sake of clarity.

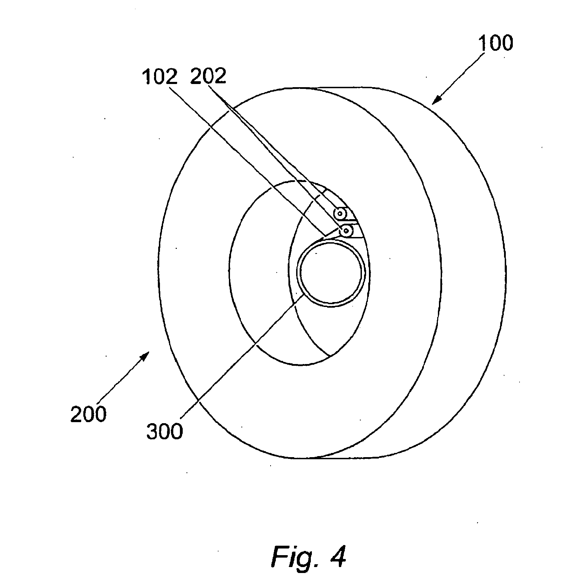

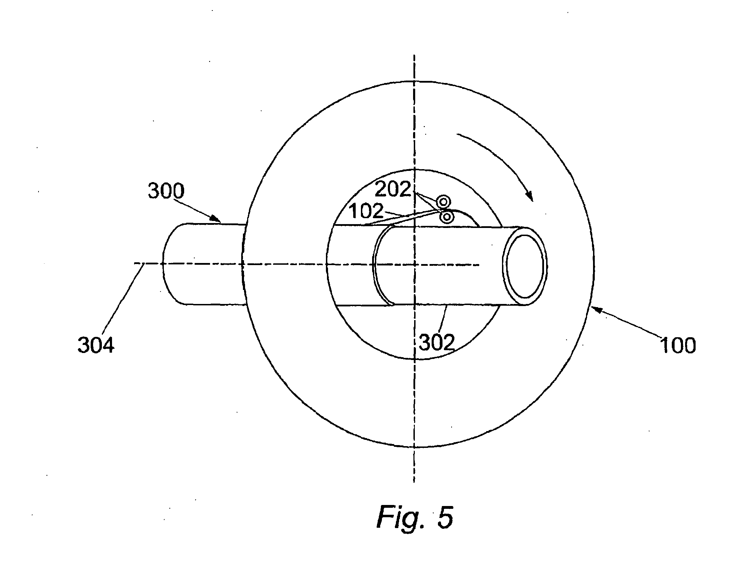

During wrapping of the tape 102 onto the hose core 302, the tension under which the tape 102 is wrapped is sensed and controlled by a co-operating pair of pinch rollers 202 (Figs. 4 & 5) forming part of the hose-wrapping machine 200.

In the particular situation where the hose 300 is to have a finished outside diameter of a nominal fourteen inches (approximately three hundred and fifty-six millimetres), the tape 102 may have one hundred and twenty-two cables 104 at 95% packing density, each cable 104 having a diameter of 6.5 millimetres. The tape 102 will have a width of four hundred and eighty millimetres and the helix angle will be in the range forty (angular) degrees to seventy (angular) degrees. The roll 100 holding sufficient of this form of the tape 102 to wrap a fourteen-inch hose having an overall length of five hundred metres will weigh about twenty-six tonnes.

For a hose of similar length but having a nominal outside diameter of three inches (about seventy-six millimetres) and using reinforcing cables having individual diameters of about three millimetres, the tape will have a width of one hundred and eighty millimetres and the roll will weigh about eight tonnes.

These high roll weights indicate the utility of the invention in enabling the avoidance of immense technical difficulties in moving such massive rolls in a planetary orbit around a hose core for the purpose of wrapping the hose with the tape contained in the roll. The tape itself greatly simplifies the problems of wrapping a hose in a large number of armouring wires or reinforcing cables by enabling simple wrapping onto to hoses without having to apply a large number of individual reinforcing cables under tension hence precluding the need for fabric reinforcements, and the tape also avoids the problems of ensuring good bonding between the wires or cables and the rubber or other elastomer since they are mutually bonded under pressure within the coating die 110 rather than within the sheathing of the hose.

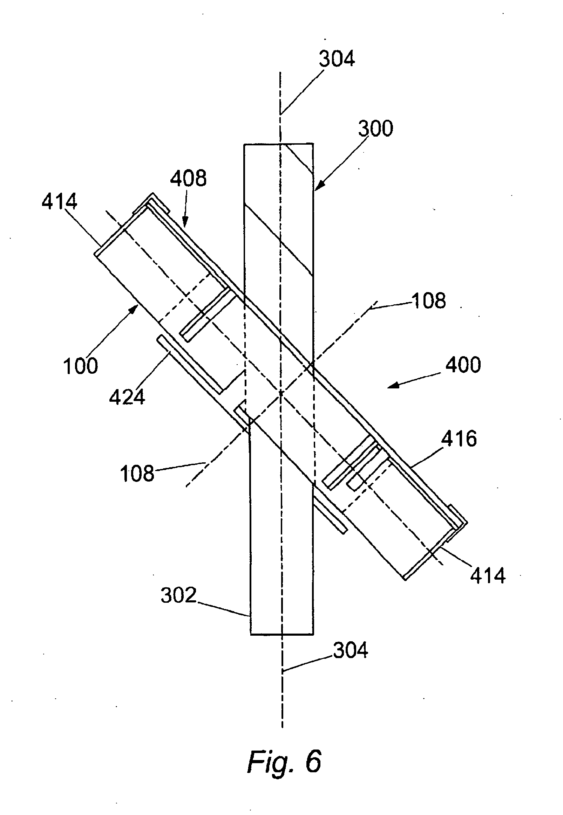

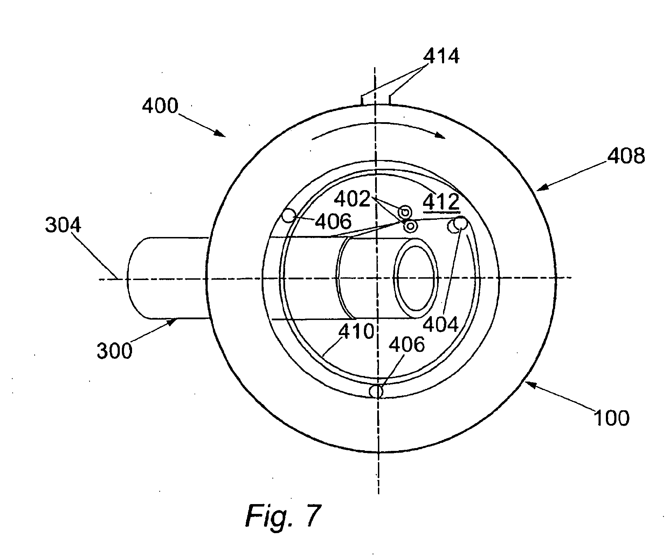

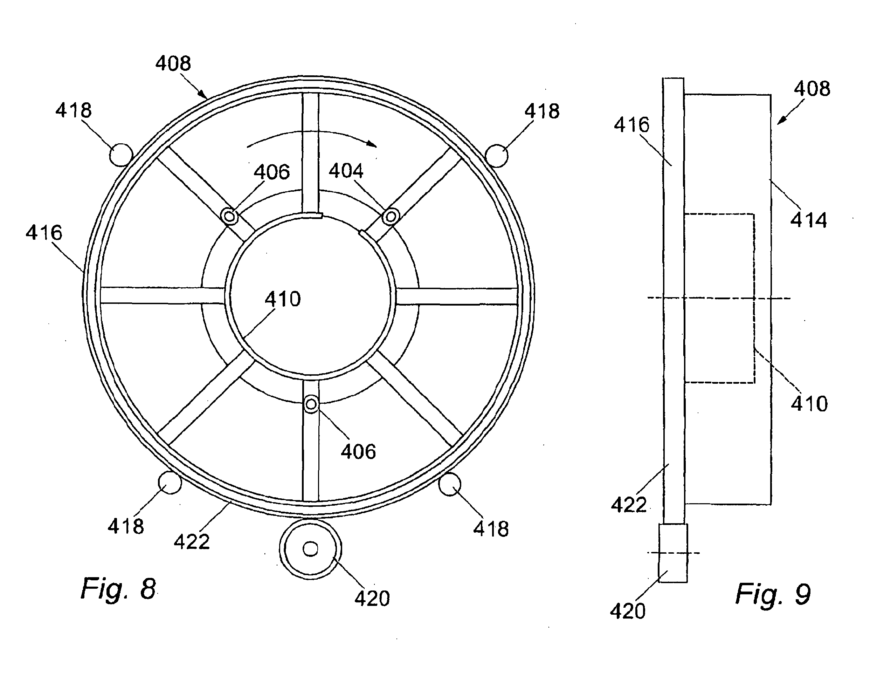

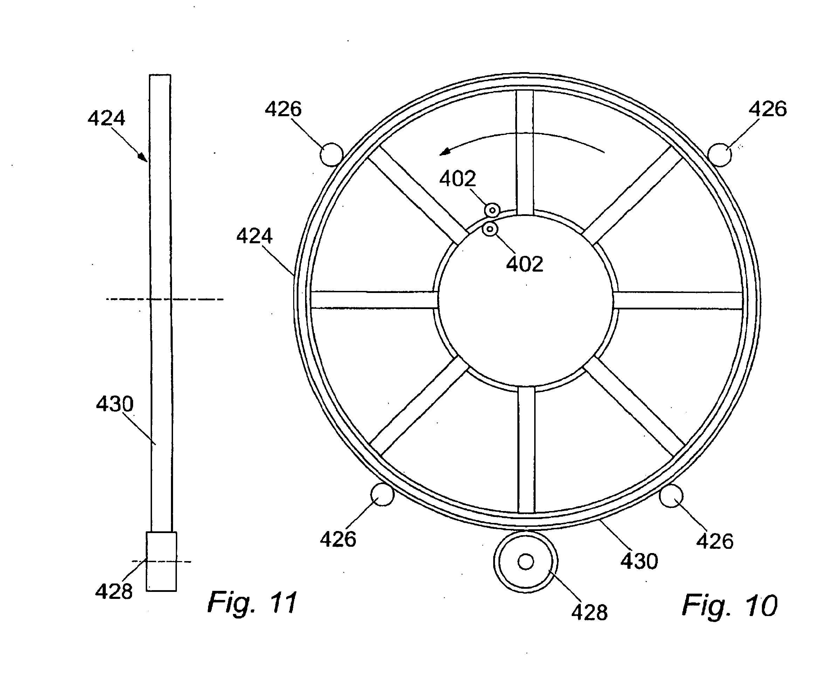

Referring now to Figs. 6 to 12, these show a second embodiment 400 of hose-wrapping machine in accordance with an aspect of the invention. The hose-wrapping machine 400 as shown in Fig. 6 corresponds to the hose-wrapping machine 200 as shown in Fig. 3, except that the machine 400 of Fig. 6 additionally comprises tape-tensioning rollers 402 (Figs. 7 & 10), tape-feeding rollers 404 (Figs. 7 & 8), clearance rollers 406 (Figs. 7 & 8), and a roll mounting system 408 (Figs. 6, 7, 8, & 9) together with other features, all to be detailed below. As with the first embodiment 200, the hose-wrapping machine 400 utilises a roll 100 of preformed armouring tape 102 as previously detailed with respect to Fig. 1.

Referring particularly to Fig. 7, this is a simplified depiction of the machine 400 looking along the axis 108 of the roll 100 (i.e. the axis 108 is perpendicular to the plane of Fig. 7, while the diametral plane of the roll 100 is parallel to the plane of Fig. 7); only certain parts of the machine 400 are shown in Fig. 7. Within the hollow centre of the roll 100 (through which the hose 300 passes at a skew angle as in the first embodiment 200), an annular shield 410 is mounted to prevent the innermost layer of tape 102 from collapsing under its own weight into unintended contact with an inappropriate part of the hose 300. The annular shield 410 has a short gap 412 through which the tape 102 is inwardly drawn by the tape-feeding rollers 404 to be pinched between the pair of tape-tensioning rollers 402 and then wrapped under controlled tension around the hose 300. The clearance rollers 406 prevent the innermost layer of tape remaining on the roll 100 from falling onto the newly unwound stretch of tape extending to the tape-feeding rollers 404 and thence through the gap 412 to the interior of the shield 410. As will be detailed below, different sections of the hose-wrapping machine 400 rotate at different speeds, and the mounting of the various rollers 402, 404, & 406 on these sections is selected so that these rollers maintain correct relative positions, as will also be detailed below.

Since this roll 100 has the coiled tape 102 withdrawn from the roll 100 by unwinding the innermost layer of the coiled material, the roll 100 cannot be supported by a conventional hub mounting (suitable for conventional peripheral withdrawal only). Instead the roll 100 is externally clamped by the roll mounting system 408 (Figs. 6 - 9) which comprises a peripheral clamp 414 mounted on a rotatable backing wheel 416. The clamp 414 (Figs. 6, 7, & 9) clamps on to the periphery of the roll 100 in order to hold the roll 100 securely and concentrically while leaving the hollow centre of the roll 100 free for the tape 102 to be unwound from the inside of the roll 100. The backing wheel 416 (Figs. 8 & 9) is rotatably supported by four support rollers 418 (Fig. 8) and is controllably rotated in use by means of a suitable drive system (not shown) by way of a gear 420 (Figs. 8, 9, & 12) meshing with the gear-toothed periphery 422 of the backing wheel 416. The rollers 404 and 406, together with the annular shield 410, are mounted on the backing wheel 416 (see Fig. 8). The shield 410 and the tension rollers 402 are mounted on a rotatably mounted front wheel 424 (Figs. 6, 10, 11, & 12) which is generally similar to the backing wheel 416. The front wheel 424 is rotatably supported by four peripheral rollers 426 for rotation about the same rotation axis as the backing wheel 416, this rotation axis being coaxial with the axis 108 of the roll 100 and skewed relative to the hose axis 304 by the helix angle as previously detailed. However, the front wheel 424 rotates at a speed that is different from the rotational speed of the backing wheel 416 for reasons detailed below. The front wheel 424 is controllably rotated in use by means of a suitable drive system (not shown) by way of a gear 428 (Figs. 10, 11, & 12) meshing with the gear-toothed periphery 430 of the front wheel 424.

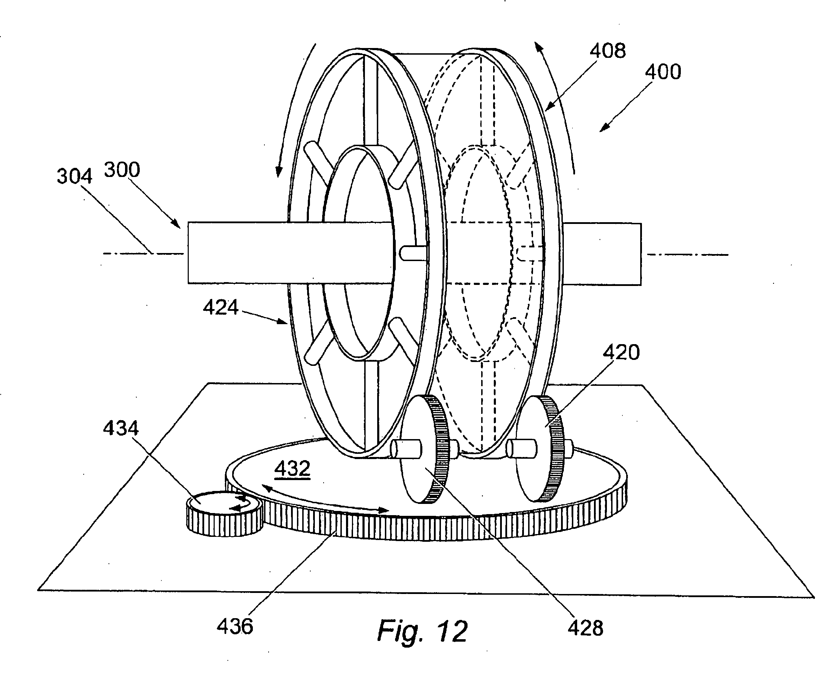

The front wheel 424, the backing wheel 408, and their respective drive systems are each mounted on a common turntable 432 (Fig. 12) whose rotation axis (vertical in Fig. 12) intersects the hose's longitudinal axis 304 (horizontal in Fig. 12) at right angles. The rotational position of the turntable 432 (and of the hose-wrapping machine 400 mounted on the turntable 432) is adjusted prior to commencing the wrapping of a length of tape onto the hose 300 in order to adjust the helix angle at which that particular length of tape will be wrapped around the hose, this rotational adjustment normally being maintained unchanged during the wrapping operation. The rotational position of the turntable 432 is controlled by a suitable drive system (not shown) by way of a gear 434 meshing with the gear-toothed periphery 436 of the turntable 432.

For the hose-wrapping machine 400 as shown in Fig. 12 to wrap tape onto and along the hose 300 in a uniform helix, it is necessary for there to be relative longitudinal movement and simultaneous relative rotational movement between the hose 300 and the machine 400. These necessary relative movements can be achieved by holding one of the hose and the machine static in an absolute sense and moving the other in an absolute sense, or by moving both the hose and the machine in an absolute sense. Attribution of absolute movement to one or other (or to both) of the hose and the machine can be selected independently for the two types of relative movement (i.e. there can be mutually independent selection for longitudinal movement and for rotational movement). In respect of the first embodiment 200 of hose-wrapping machine (as detailed with reference to Figs. 3 - 5), it was preferred to move the hose 300 longitudinally while maintaining the hose rotationally static, and conversely to maintain the hose-wrapping machine 200 longitudinally static while rotating the machine 200 around the hose 300. In respect of the second embodiment 400 of hose-wrapping machine (as detailed with reference to Figs. 6 - 12), it is preferred to move the hose 300 longitudinally through a longitudinally static machine 400; the necessary relative rotational movement can be accomplished either by bodily moving the entire machine 400 around a non-rotating hose 300, or by rotating the hose 300 around its longitudinal axis 304 within a machine 400 in which the only rotation is the separate rotation of the wheels 408 and 424 about their common axis (as detailed below). For the option of bodily rotating the entire machine 400, it could be mounted in a rotatable cradle or framework (not shown) controllably rotated around the longitudinal axis 304 of the hose 300 being wrapped by the machine 400.

Whichever option is selected for relative rotation of hose and machine in the Fig. 12 arrangement, rotation of the wheels 408 and 424 (relative to the remainder of the hose-wrapping machine 400) is controlled such that the front wheel 424 rotates around the skewed roll axis 108 at one revolution per pitch of wrapped tape, while the backing wheel 408 rotates around the same skewed roll axis 108 at one revolution per pitch of wrapped tape plus sufficient additional rotation to unwind one pitch length of tape from the inside of the roll 100.

A further alternative for hose-wrapping operation consists of modifying the machine 400 as described above and as illustrated in Fig. 12 such that both the hose 300 and the machine 400 (as a whole) are maintained non-rotational about the longitudinal axis 304. In this further alternative, only the tape roll 100 with its immediate supporting structures 408 and 424 are rotatable with rotation being solely about the roll axis 108 that is skewed relative to the hose axis 304 by the intended helix angle of the wrapped tape. The roll axis 108 per se is fixed in absolute terms and does not revolve about the hose axis 304 as in some previous forms of the hose-wrapping machine. In order to facilitate uniform helical wrapping of the tape onto the hose in this further alternative, a lay-correcting means (not shown) is preferably interposed between the roll and the hose, the lay-correcting means being applied to the newly unwound but not yet wrapped tape so as properly to align the tape as it comes into contact with the hose being wrapped.

As well as wrapping cable-reinforced armouring tape 100 (as described with reference to Figs. 1 & 2), the hose-wrapping machines 200 and 400 can be utilised without modification for the wrapping of tapes not containing wires or cables (e.g. tapes of plain elastomer for simple waterproofing). Thus the hose-wrapping machines in accordance with the invention can be used without modification for all stages of hose fabrication, and in a multi-machine production line, all hose-wrapping machines can be of the same type. Setting-up and operational control for use of the same machine in successive fabrication stages (with multiple passes of the hose), or for the use of multiple machines in a multi-stage production line along which the hose passes once, are considerably simplified and speeded-up. Compared to conventional hose-wrapping machines, the machines of the invention are smaller and cheaper, and consume less power in use. Much longer lengths of hose can be fabricated without joints, and rolls of wrapping material that are much heavier than could previously be handled can now be dealt with relatively easily. Unwinding of tape from the inside of the tape roll eliminates twist and stretch of tape-wrapping materials; in particular, armouring wires and cables are no longer twisted by being wrapped onto hoses.

While certain modifications and variations have been described above, the invention is not restricted thereto, and other modifications and variations can be adopted without departing from the scope of the invention as defined in the appended claims.

## Claims

1. A tape of hose-sheathing material comprising an array of mutually parallel armouring wires or cables extending along its length, the array being embedded in a polymer wherein the cables are closely spaced in a single layer without touching or mutually crossing.

2. A tape of hose-sheathing material as claimed in claim 1, wherein the polymer is an elastomer or a thermoplastic elastomer or a plastic.

3. A tape of hose-sheathing material as claimed in claim 2, wherein the polymer is synthetic rubber.

4. A tape of hose-sheathing material according to any one of the preceding claims, the wires or cables being at a 95% packing density.

5. A tape of hose-sheathing material according to any one of the preceding claims, wherein the cables each have an open multi-strand form.

6. A tape of hose-sheathing material according to any one of the preceding claims, wherein the cables are steel.

7. A tape of hose-sheathing material according to any one of claims 1-4, wherein the cables are carbon fibre or Aramid in the form of cords, wires, fibres or cables.

8. A tape of hose-sheathing material according to any one of the preceding claims, wherein the cables have a diameter of about 3mm.

9. A tape of hose-sheathing material according to any one of claims 1-7, wherein the cables have a diameter of 6.5mm.

10. A hose reinforced with a tape of hose-sheathing material according to any one of claims 1-9.

11. A method of reinforcing a hose by wrapping a tape of hose-sheathing material according to any one of claims 1-9 onto a hose core.
